Europäisches Patentamt

European Patent Office

Office européen des brevets

(19)

(11) Publication number: **0 402 661 B1**

# EUROPEAN PATENT SPECIFICATION

(45) Date of publication of patent specification:
**21.04.93 Bulletin 93/16**

(51) Int. Cl.⁵: **C02F 1/28,** C02F 1/00,
C02F 1/50, B01D 35/04,
C02F 9/00

(21) Application number: **90109569.5**

(22) Date of filing: **19.05.90**

(54) **Portable water purification devices using low density activated carbon.**

(30) Priority: **22.05.89 US 355015**

(43) Date of publication of application:
**19.12.90 Bulletin 90/51**

(45) Publication of the grant of the patent:
**21.04.93 Bulletin 93/16**

(84) Designated Contracting States:
**AT BE CH DE DK ES FR GB GR IT LI LU NL SE**

(56) References cited:
**DE-A- 2 233 002
GB-A- 1 199 418
GB-A- 1 259 154
US-A- 4 110 219
US-A- 4 540 489
US-A- 4 695 379
US-A- 4 836 921
US-E- 20 494**

(56) References cited:
**PATENT ABSTRACTS OF JAPAN, vol. 12, no. 258 (C-513), 20th July 1988; & JP-A-63 042 790 (NIPPON YOKI KOGYO) 23-02-1988
PATENT ABSTRACTS OF JAPAN, vol. 9, no. 228 (C-303), 13th September 1985; & JP-A-60 087 888 (SHIGEMI UCHIDA) 17-05-1985**

(73) Proprietor: **INNOVA/PURE WATER INC.
Clearwater, Florida (US)**

(72) Inventor: **Pouli, Dirk
5170 126th Avenue North
Clearwater, Florida 33520 (US)**
Inventor: **Mierau, Bradley D.
12001 9th St. N., No. 2612 St Petersburg,
Florida 33716 (US)**

(74) Representative: **UEXKÜLL & STOLBERG
Patentanwälte
Beselerstrasse 4
W-2000 Hamburg 52 (DE)**

EP 0 402 661 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

There are many places throughout the world where it is very desirable to utilize some sort of a water purification device in association with tap water. Such devices are preferably used to remove organics within the tap water, although they can be designed and utilized to remove other pollutants besides organics. There are a wide variety of different types of water purification devices. Most relatively inexpensive units, however, either suffer from low removal efficiencies, or low pour and fill rates. Even some expensive units may suffer from such difficulties. Some units also have problems with bacteria growth, particularly units that contain activated carbon and operate at room temperature.

Typical activated carbon units often have low residence times because there is insufficient time for the water to be in contact with the activated carbon as the water passes through the activated carbon. The residence time can be increased by increasing the amount of activated carbon, however this has practical limits due to the weight of activated carbon. For example a 3,8 l (one gallon) container filled with particulate activated carbon would weigh 1,7 to 2,3 kg (four to five pounds). That would also leave very little room for water to be treated. Increasing the amount of activated carbon in a typical unit also results in an increased resistance to the flow of water, thus it may become impractical to operate the unit without applying pressure or vacuum.

According to the invention it has been found that it is possible to provide a high residence time for water in contact with a water pollutant removal material, such as activated carbon, while at the same time providing high fill and pour rates. This can be done inexpensively, without increasing drastically the weight of the treatment unit, and is accomplished by providing the water pollutant removal material in a low volume configuration.

A "low volume configuration" -- as that term is used in the instant specification and claims -- refers to a configuration in which the material is uniformly disposed throughout a particular volume, but yet actually only occupies a small percentage of the actual volume. Typical low volume configurations that the water pollutant removal material could have are open cell foams (e.g. urethane foams), felts, paper, woven and non-woven "cloth". For example polyester or rayon material having a thickness of at least 0,3 cm (one-eight inch) and a weight of at least 101,7 g/m$^2$ (three ounces per square yard) may be impregnated with activated carbon and binder. The amount of activated carbon and binder may be a multiple of the weight of the non-woven -- for example the weight of the activated carbon and binder could be twice as great as the weight of the non-woven itself. Such a product has a "low volume configuration" because it actually occupies only 10-60% (e.g. 10-40%) of the volume in which it is disposed -- that is it has a void volume of 40-90% (e.g. preferably 60-90%). One desirable way to dispose such a product within the volume is to roll it up into a spiral roll. For example the width of the non-woven carbon impregnated sheet could be substantially the same as the height of a container in which it is disposed, thereby being substantially uniformly disposed within the container.

The low volume configuration water pollutant removal material typically is disposed in a container having an inlet and an outlet. Also the container preferably has means defining a liquid path from the inlet to the outlet which requires the liquid to pass through the material. For example the material could be disposed within a retention filter, and the water could be required to pass through the material before it moves through the retention filter to an annular passageway adjacent the interior walls of the container. The annular passageway would be formed by a plurality of spacers extending from the interior walls of the container into contact with the retention filter. A wide variety of different configurations of inlets, outlets, and water pollutant removal materials may be provided. The whole purpose is to provide sufficient residence time of the material in contact with the water, while still providing high fill and pour rates.

More than one water pollutant removal material may be provided within the container. For example the water may be forced to flow through a biocide material before flowing into contact with activated carbon, or vice versa. The biocide material and activated carbon would both be provided in low volume configurations (e.g. impregnated non-wovens, or the like). Another example of plurality of function would be a device where chelating ion-exchange resins are bound concurrently with activated carbon onto a substrate providing a low volume configuration.

According to another aspect of the present invention there is provided a method of purifying tap water utilizing a container including a water pollutant removal material in a low volume configuration. The method comprises the following steps: (a) Filling the container with water directly from the tap at a rate of at least 1,9 l/min (one half gallon per minute). (b) Maintaining the tap water in the container at least about 30 seconds, in contact with the material, to effect removal of pollutants therefrom. And, (c) pouring purified water from the container at a pour rate of at least 1,9 l/min (one half gallon per minute). Preferably, the water pollutant removal material comprises activated carbon, and step (b) is practiced so as to effect removal of at least 85% of the organic contaminants of the tap water. Preferably, step (b) is practiced by filling 10-40% of the interior volume of the container in a substantially uniform configuration with activated carbon in a porous low volume form. That is the activated carbon has a void volume of 40-90% (e.g. 60-90%).

It is the primary object of the present invention to provide for the effective removal of water pollutants from tap water or the like, in an inexpensive manner, while providing high pour and fill rates. This and other objects of the invention will become clear from an inspection of the detailed description of the invention and from the appended claims.

FIGURE 1 is a side view, partly in cross-section and partly in elevation, of a first embodiment of a container according to the present invention;

FIGURE 2 is a perspective view of an exemplary configuration that the water pollutant removal material in the container of FIGURE 1 may have, the material being shown as it is being rolled up;

FIGURES 3 through 7 are side views, partly in cross-section and partly in elevation, of several other embodiments that the top of the container of FIGURE 1 could have;

FIGURES 8 and 9 are side views, partly in cross-section and partly in elevation, of exemplary configurations of a container these embodiments illustrating two different water pollutant materials in low volume configurations disposed within the container;

FIGURE 10 is a side cross-sectional view of an exemplary easily transportable unit for purifying water; and

FIGURE 11 is a side cross-sectional view of a relatively large semi-stationary water purification device designed to be placed in a refrigerator.

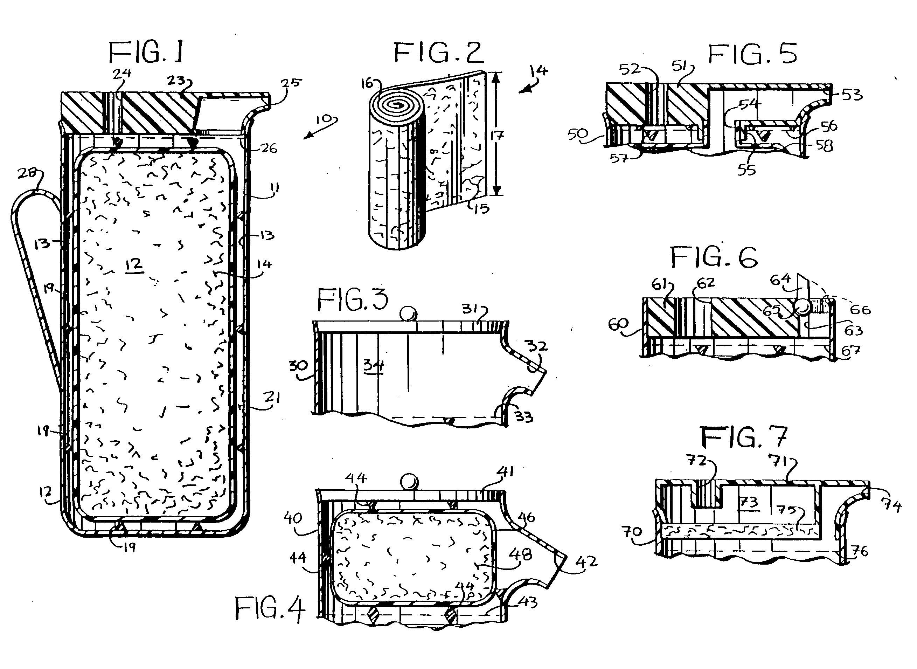

An exemplary container according to the present invention is shown generally by reference numeral 10 in FIGURE 1. The device includes a body 11 having a hollow interior of a given effective volume, the hollow interior being shown generally by reference numeral 12. The hollow interior is defined by interior walls 13. Disposed within the interior volume 12 is a water pollutant removal material, in a low volume configuration, 14. The material can be in a wide variety of different actual shapes or forms. For example non-woven "cloth", paper, felt, and foams are all configurations that can have the water pollutant removal material impregnated thereon, yet be in a "low volume" configuration -- i.e. actually take up only a small percentage of the space that they actually occupy. Typically, it is desirable to have the water pollutant removal material 14 10-60% (e.g. 10-40%) of the effective volume 12 -- i.e. actually have a void volume of 40-90% (e.g. 60-90%). That is, even though the material 14 may be substantially uniformly distributed throughout the entire volume 12, it only actually occupies, e.g., 10-40% of the volume.

The material 14 is shown in a particularly desirable configuration in FIGURE 2. In this configuration it comprises a sheet 15 that has been formed into a spiral roll 16. The roll has a width 17, which is substantially comparable to the interior height of the volume 12. Even though the material 14 is disposed in almost the entire volume 12 of the device 10, it only actually occupies 10-40%, i.e. it has a void volume of 60-90%, which void volume can be filled with water in intimate contact with the water pollutant removal material.

The water pollutant removal material may be selected from a wide variety of materials. For example it could be an ion exchange resin, a biocide (e.g. an iodine complex), activated carbon, etc. Activated carbon is the most common form that the material will take when the device 10 is to be utilized for removal of organics. In fact non-woven sheets and foams impregnated with activated carbon are already commercially available, and such commercially available constituents may be utilized in the device 10.

It is desirable -- as illustrated in FIGURE 1 -- to provide spacers 19 uniformly distributed along the interior wall 13 of the container 11. The spacers 19 are designed to engage a retention filter 20 or the like, to form an annular, enveloping, space 21 between the interior walls 13 and the retention filter 20. Such a space typically would have a width of 0,16-0,32 cm (1/16 - 1/8 inch). The purpose of the retention filter 20 is to prevent any carbon particles, or the like, that do come loose from the fibers on which they have been impregnated, from flowing out of the container 11, while filtering out some large particles so they do not enter material 14. The retention filter 20 is preferably be designed to retain carbon particles that became detached and have a size of 20-40 microns.

The retention filter 20 may be utilized to remove suspended solids and keep in particles of activated carbon that may become loosened, or it may also act as a protozoa filter. In the latter case it would have to have a pore size of less than 2.5 microns.

The container 11 also includes a lid 23, which is basically hollow, and has an inlet passage 24, and an outlet, or pour spout, 25. A perforated plate retainer (such as a perforated plastic plate), which also has spacers thereon, is preferably provided between the lid 23 and the top of the retention filter 20.

A particular form of the water pollutant removal material -- when organics are to be removed -- that is suitable according to the present invention is a non-woven sheet of polyester or rayon that has been impregnated with carbon and a binder. The void volume of such "cloth" is typically 60-90%. For example sheets of such polyester non-woven having thicknesses of 0,32 cm (1/8 inch) to 1,27 cm (1/2 inch) and weights ranging from about 3.2 ounces per square yard to 409,9 g/m² (12 ounces per square yard) have been tested. In each case the cloth has been impregnated with 200% "add on" of a combination of activated carbon and binder. That is

3

if the greig weight of the non-woven is 108,5 g/m² (3.2 ounces per square yard), it is impregnated with about 181,4 g (6.4 ounces) of carbon and binder, an add on of 200%. Such material can be rolled up in a configuration illustrated in FIGURE 2, and provides excellent removal of organics and certain inorganics from water within the container 11. However as previously mentioned a wide variety of other materials, such as urethane foam impregnated with activated carbon, carbon impregnated papers and felts, and the like, may be provided. Polyester or rayon non-woven cloth impregnated with carbon and binder are particularly advantageous since they may be purchased commercially, are for the most part readily wettable, and can be made from FDA approved materials. The activated carbon may be added to other fibers, or be in fibrous form itself.

The configuration of impregnated water treatment material is not restricted to inherently bonded materials such as fabrics, rather the design is intended to include loose materials such as impregnated fibers or chips of impregnated non-wovens which remain uniformly dispersed upon filling the device with water.

An example of a particularly useful material 14 is a non-woven impregnated with 200% add on of activated carbon having a void volume of 70%, in a spiral roll configuration. Using such material (the non-woven was either polyester or polyurethane), the results in TABLE I were achieved.

## TABLE I

| Residence | Concentration | % Removal |
|---|---|---|

**Safranin O Removal**
**Polyester Base Material**

| | | |
|---|---|---|
| 0 min | 10,000 ppb | 0 |
| 1 min | 2,700 ppb | 73% |
| 5 min | 1,100 ppb | 89% |
| 20 min | 300 ppb | 97% |
| 60 min | 230 ppb | 97.7% |
| 120 min | 50 ppb | 99.5% |

**Polyurethane Base Material**

| | | |
|---|---|---|
| 0 min | 10,000 ppb | 0 |
| 1 min | 1,400 ppb | 86% |
| 5 min | 400 ppb | 96% |
| 20 min | 100 ppb | 99% |
| 60 min | 80 ppb | 99.2% |

Iodine Removal

Polyester Base Material

| Residence | Concentration Iodine ($I_2$) | | % Removal |
|-----------|-------------|-----|-----------|
| 0 min     | 214  | ppm | 0         |
| 1/4 min   | 143  | ppm | 33.2%     |
| 1/2 min   | 48.0 | ppm | 77.6%     |
| 1 min     | 39.0 | ppm | 81.8%     |
| 2 min     | 28.7 | ppm | 86.6%     |
| 5 min     | 4.82 | ppm | 97.7%     |
| 10 min    | 3.57 | ppm | 98.3%     |
| 30 min    | 1.78 | ppm | 99.2%     |

Lead Removal

Polyester Base Material

| Residence | Concentration Lead ($Pb^{++}$) | | % Removal |
|-----------|------------------|-----|-----------|
| 0 min     | 230± 57.6 | ppb | 0         |
| 1/2 min   | 21.9      | ppb | 87.8%     |
| 2 min     | 11.2      | ppb | 94.8%     |
| 5 min     | 7.41      | ppb | 95.9%     |
| 10 min    | <7.43     | ppb | >96.7%    |
| 30        | <5        | ppb | >98.4%    |

## Chlorine Removal
## Polyester Base Material

| Residence | Concentration Chlorine | (HOCL/OCL) % Removal |
|---|---|---|
| 0 min | 10 ppm | 0 |
| 1 min | 1.4 ppm | 86% |
| 2 min | 1.2 ppm | 88% |
| 5 min | 1.0 ppm | 90% |
| 10 min | 0.6 ppm | 94% |

## Chloroform Removal
## Polyester Base Material

| Residence | Concentration Chloroform | % Removal |
|---|---|---|
| 0 | 692± 77 ppb | 0 |
| 1/2 min | 39.6 ppb | 93.7% |
| 5 min | 19.9 ppb | 97.3% |
| 30 min | 19.4 ppb | 97.0% |
| 120 min | 13.4 ppb | 98.2% |

More generally, utilizing the device of FIGURE 1, for example, one will have a high fill and pour rate while still providing excellent removal efficiency. Filling a container 11 with tap water, one could fill the container essentially as quickly as a normal faucet (in a home) would allow the water to enter the container 11 (i.e. at 3,78-5,67 l/min (1 - 1 1/2 gallons per minute)), yet effective treatment would be provided even if -- after filling -- the water were immediately poured out of the container 11. Again the pour rate would be high, on the order of 3,78 l/min (a gallon per minute). According to the invention it is desirable to ensure that the fill and pour rates are at least 1,9 l/min (1/2 gallon per minute). Even with such fill rates, the device 10 of FIGURE 1 -- where activated carbon is utilized as the water pollutant removal material -- is capable of removing in excess of 85-90% of the organic contaminants.

FIGURES 3 through 7 show some of a wide variety of other alternatives that the top part of the container according to the invention may have.

In FIGURE 3, the container 30 has a large open top, closed off by the one piece lid 31, with a large open chamber 34. A perforated plate retainer 33 is disposed at the bottom of the open top, and a pour spout 32 provides the outlet for water from the container. The lid 31 is removed to allow filling of the container 30, and after it has been filled with water up to the level of the perforated plate 33, the lid 31 is replaced and the container may then be utilized to dispense liquid out of the pour spout 32.

In the FIGURE 4 embodiment, the container 40 contains a shallow lid 41 like the lid 31. However in this embodiment instead of there being a large open space 34 at the top of the container 40, additional water pollutant removal material is provided at the top of the container. Water is dispensed from the container 40 through the outlet (pour spout) 42. The retainer plate 43 not only retains the water pollutant removal material at the bottom of the top chamber, it has spacers 44 extending upwardly therefrom which engage the retention filter 46 surrounding the water pollutant removal material 48. Spacers 44 are also provided on the interior wall of the container 40, and on the bottom of the shallow lid 41.

In the FIGURE 5 embodiment, a particular pathway is provided for the water as it is directed into the container 50 so that it can never bypass the water pollutant removal material and flow directly to the outlet. In this embodiment, the lid 51 has an inlet 52 thereto, and the outlet or pour spout 53. Extending downwardly from the pour spout 53 is an outer solid walled tube 55, comprising part of the lid 51. Received within the outer tube 55 in sliding/sealing engagement is an inner solid walled tube 54 which is in communication with the interior of the container 50, and particularly in direct communication with the water pollutant removal material therein so that any water passing through the tube 54 must first pass through the water pollutant removal material. A perforated plate 56, which is apertured to receive the tubes 54, 55, and has spacers 57 extending downwardly therefrom to engage the particle filter 58 surrounding the water pollutant removal material, is provided below the lid 51. The lid 51 may be removable, but care must be taken to ensure that the tube 55 is aligned with the tube 54 when the lid 51 is put back into place after removal.

The embodiment of FIGURE 6 shows a container according to the invention which has a closable pour spout. In this embodiment the container 60 has a lid 61 which includes the inlet opening 62 therethrough, and an outlet opening 63 therefrom. The outlet opening has disposed therein a movable pour spout 64 which is mounted for pivotal movement about a horizontal axis by the hollow cylindrical bearing 65. As indicated by the dotted line position in FIGURE 6, the pour spout 64 may be moved to a down, closed position 66, in which case the through-extending passageway and the spout 64 is not in communication with the outlet 63, and therefore water may not be dispensed from the container 60 through the outlet 63. A perforated retainer plate 67 is disposed in the container 60 below the lid 61.

In the FIGURE 7 embodiment, the upper portion of the container, specifically the removable lid thereof, includes a filter for removal of suspended solids, which provide a structure relatively easy to clean or replace and/or enhances the operation of the water pollutant removal material within the container 70. The lid 71 is hollow, and has an inlet 72 thereto which define a chamber 73, and has a pour spout/outlet 74. At the bottom end of the chamber 73 is a replaceable filter 75, such as a suspended solids filter for removing particles. For example the filter 75 may have a pore size of 20-40 microns. Where it is desired that the filter 75 be for removal of protozoa, then the pore size will be less than 2.5 microns. Obviously with the less than 2.5 micron pore size filter 75 the fill rate of the container 70 will be reduced. Below the lid 71, spaced from the filter 75, is the perforated retainer plate 76.

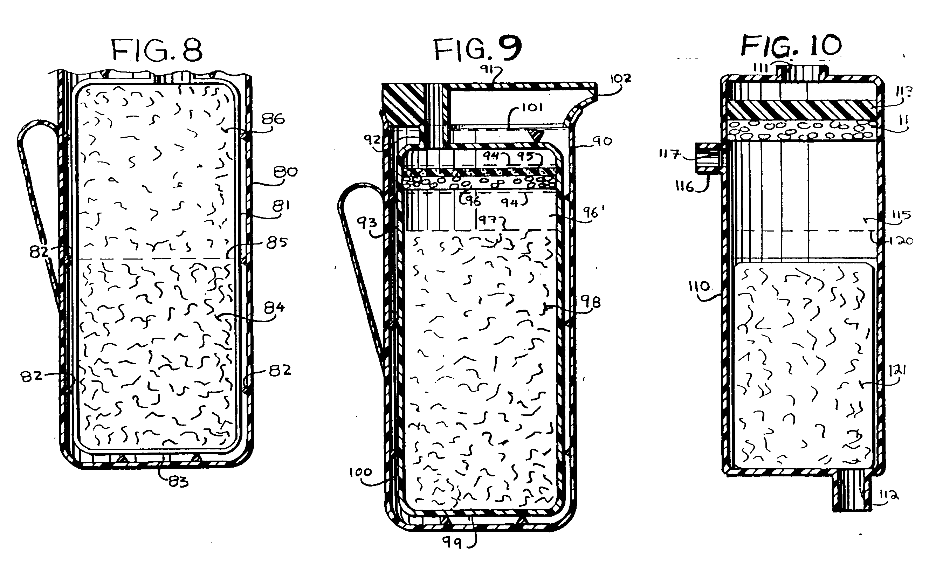

The FIGURE 8 embodiment illustrates the bottom of a modification in which more than one type of water pollutant removal material is provided in the container. A container 80 of the FIGURE 8 embodiment may utilize any of the lid structures heretofore described, or any other suitable lid structure. In this embodiment, the retention device 81 -- instead of being a filter -- has impermeable side walls. This may be accomplished by coating a conventional filter retainer with a plastic or other permeable material. Spacers 82 extend from the interior walls of the container 80 to engage the retention device 81. At the bottom 83 of the retention device, it is porous, performing its normal filtering and retention functions. That is, for example, the bottom 83 of the retention filter would not be coated with an impermeable material while the rest of the retention material 81 would be.

In the bottom portion of the container 82, a biocide water pollutant removal material 84 is provided in a low volume configuration, as heretofore described. The biocide material may have an iodine base, or it may be from a variety of other materials. A porous divider plate 85, for example having a thickness of 0,25-0,76 mm (.01-.0.3 inches), is provided to separate the first water pollutant removal material 84 from the second water pollutant removal material 86. For example the material 86 may be activated carbon in a low density configuration, as heretofore described. The retention device 81 impermeable sides, the spacing between the interior walls of the container 80, and the retention device 81, and the porous bottom 83, require that any water to be dispensed by the container 80 flows through both types of water pollutant removal materials. In the exemplary embodiment described above, then, all water dispensed by the container 80 would pass through the biocide 84 material and the organics removal material 86.

Other, second, water pollutant materials could also be utilized. For example lead (or other heavy metal) specific ion exchange resins may be utilized for removal of other pollutants.

In the FIGURE 9 embodiment, too, two different types of water pollutant removal materials are utilized. However in this embodiment, the second water pollutant removal material is positioned in a much different manner than in the FIGURE 8 embodiment.

In FIGURE 9, the container 90 has an inlet tube 92 in communication with the feed opening through the lid 91. The retention device 93 has solid sidewalls. A pair of perforated plastic retainer plates 94 are disposed above and below the materials 95, 96. 95 is a compressible foam, and 96 is a biocide material which -- for example -- could be in bead form (as is conventional), rather than having a low volume configuration as earlier described. Below the bottom retainer 94 is a water space 96', and below that a perforated plastic retainer plate 97 disposed above the water pollutant removal material 98. The material 98 is preferably an organics removal material such as activated carbon in a low volume configuration as heretofore described. The bottom 99 of the retention device 93 is porous.

In operation of the device of FIGURE 9, water introduced through the opening 92 must pass through the biocide material 96 (since it has no other place to flow), and then passes through the activated carbon or the like 98, before it flows through the porous bottom 99 and moves in the annular opening 100 to and through the retainer 101 and the pour spout 102. Thus a means is provided for directing the flow of water so it must pass through the biocide and the activated carbon.

FIGURE 10 schematically illustrates a "travel kit" embodiment. In this embodiment, the container 110 has a feed inlet 111 and a pour spout 112. Water introduced into the container must first flow through the porous polyurethane foam 113, and then through the biocidal bead material 114 (e.g. bed depth of 0,63-1,27 cm (1/4-1/2 inch)). Below the biocidal bead material is an open space 115 to which a hand held suction device may be connected via nipple 116 having air permeable/water impermeable valve 117 therein. Suction is applied to facilitate passage of the water into the container 110. Below a perforated retainer plate 120 is provided the water pollutant removal material -- such as organics removal material activated carbon in a low volume configuration -- 121, through which the water must pass before exiting pour spout 112.

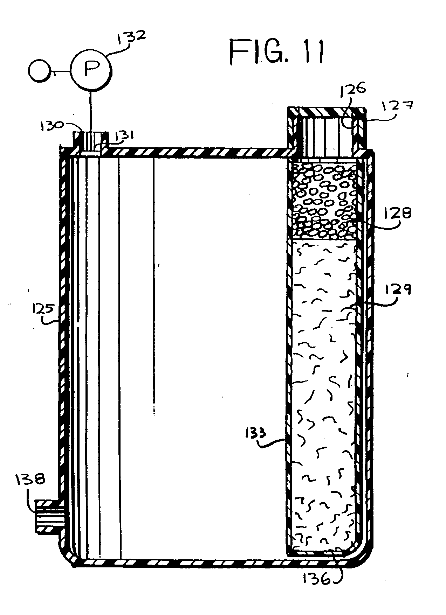

The embodiment of FIGURE 11 is similar to that of FIGURE 10, except that it is designed as a large, semi-stationary device, particularly for placement in a refrigerator. The container 125 preferably has a volume of 7,56-11,34 l (2 to 3 gallons). Water to be treated which is introduced into container inlet 126 (which is on a removable but sealed lid 127) first passes through biocide material 128 in a low volume configuration, and then through a second water pollutant removal material 129. Preferably the material 129 is activated carbon in a low density configuration. The amount of biocide material takes up the volume of 0,473 l (one pint), while the activated carbon takes up 1,9 l (one-half gallon). A hand operated suction pump 132 optionally may be attached to the nipple 130, the nipple 130 having an air permeable but water impermeable valve 131 therein. Typically suction would be applied to the nipple 130 only during filling of the container 125. Since the sidewalls of the retention device 133 for the biocide and activated carbon are impermeable and only the bottom 136 of the retention device is water permeable, all water treated must pass through the pollutant removal materials before it can exit the pour spigot 138.

Utilizing the teachings of the present invention, for example the container system of FIGURES 1 and 2, it is possible to provide high fill and pour rates, while still providing sufficiently high residence time of the water being treated in contact with the water pollutant removal material, so that the pollutant removal efficiency is high. For example, considering a system such as illustrated in FIGURES 1 and 2 wherein the water pollutant removal material is activated carbon, it is possible to have a fill rate (and pour rate) virtually as high as the rate at which water is typically delivered from a conventional tap in a residence. That is the pour and fill rate will be at least 1,9 l/min (one-half gallon per minute), and typically would be in the range of 1,9-5,67 l/min (1/2 - 1 1/2 gallon per minute). Merely by maintaining the water in the container for greater than about 30 seconds, the vast majority of the organic pollutants are removed, e.g. in excess of 85-90%. Specific examples of activated carbon, low volume configuration materials, that allow such results to be achieved are as follows: a polyester non-woven having a thickness of 0,32 cm (1/8 inch) and weight of 108,5 g/m$^2$ (3.2 ounces per square yard) with a carbon loading of 200% (i.e. 6.4 ounces per square yard of a combination of carbon and binder is applied). The polyester non-woven is formed into a spiral roll configuration (see FIGURE 2) and placed in a container. Although the container is substantially filled with the low volume configuration activated carbon impregnated non-woven, in actuality only 20% of the effective volume of the container is actually occupied. This leaves 80% of the container that may be filled with the water being treated, yet the water within the container will be in contact with activated carbon virtually at all times, providing a residence time substantially as long as the time that the water is in the container. Also known to be effective are polyester non-wovens having a thickness of 1,27 cm (one-half inch) and a weight of either 203,5 g/m$^2$ (6 ounces per square yard), or 406,9 g/m$^2$ (12 ounces per square yard), also having 200% add on of activated carbon and binder combined. All such products are commercially avaiblable, and the amount of activated carbon and binder add on can be specified. For the practice of the invention it is desirable to provide an add on of 100% or more.

While specific examples have been described above, the examples are non-limiting. In fact many other fibers can be utilized for non-wovens including polypropylene, rayon and nylon. Also the activated carbon impregnated material may have a different configuration as long as it is a low volume configuration; for example it could be in the form of a felt, a paper, or a foam. For example open cell urethane foam impregnated with activated carbon provides an excellent low volume configuration water pollutant removal material. In each of these situations it is desirable to have the water pollutant removal material occupy a significant portion of the container volume, though the material itself has a void volume of 60-90%.

In the practice of the method of the present invention, it is possible to purify tap water utilizing a container including the water pollutant removal material in a low volume configuration. The method comprises the steps

8

of: (a) Filling the container with water directly from the tap at a rate of at least about one half gallon per minute. (b) Maintaining the tap water in the container at least 30 seconds, in contact with the material, to effect removal of pollutants therefrom. And, (c) pouring purified water from the container at a pour rate of at least one half gallon per minute. Preferably the water pollutant removal material comprises activated carbon, and step (b) is practiced so as to effect removal of at least 85% of the organic contaminants of the tap water. Also preferably step (b) is practiced by filling 10-40% of the interior volume of the container in a substantially uniform configuration with activated carbon in a porous sheet form -- that is providing the material with a void volume of 60-90%.

**Claims**

1. A container (10) for purifying water comprising: a body (11) having a hollow interior (12) of a given effective volume; and an inlet (24) to said hollow interior and an outlet (25) therefrom; characterized by
   a water pollutant removal material (14) in a low volume configuration substantially evenly distributed in said effective volume and having a void volume of 40-90%, so as to achieve long residence times of water in contact with said pollutant removal material, while providing high fill rates and high pour rates for the container.

2. A container as recited in claim 1 further characterized in that said water pollutant removal material (14) is in a configuration selected from the group consisting essentially of material impregnated fibers, non-wovens, wovens, papers, felts, and foams.

3. A container as recited in claim 1 further characterized in that said water pollutant removal material comprises fibers including activated carbon material in a spiral roll (16) configuration, portions thereof being within the majority of the effective volume of said body.

4. A container as recited in claim 1 further characterized in that said material is contained within a retention filter (20) within said hollow interior.

5. A container as recited in claim 4 further characterized by said retention filter being spaced from the interior walls of said body by spacing means (19), so as to define a passageway (21) between said interior walls and one of said inlet and said outlet.

6. A container as recited in claim 5 further characterized in that said retention filter is porous only at the bottom thereof and has an inlet at the top thereof, being non-porous at most of the rest of the portions thereof so as to require water being treated to flow from the inlet through the bottom thereof to escape said container.

7. A container as recited in claim 1, wherein said water pollutant removal material comprises a first material, and further characterized by a second water pollutant removal material (48) disposed within said hollow interior, said second material cooperating with said first material to remove different types of pollutants from the water.

8. A container as recited in claim 1 further characterized in that said water pollutant removal containing material comprises a non-woven cloth (15) impregnated with activated carbon and binder, said cloth having a thickness of at least 0,3 cm (one-eighth inch), a weight of at least 101,7 g/m$^2$ (three ounces per square yard), and at least 100% add on of activated carbon and binder combined.

9. A method of purifying tap water utilizing a container (10) including a water pollutant removal material (14) in a low volume configuration having a void volume of 40 - 90%, by practicing the steps of:
   (a) filling the container with water directly from a non-pressurized tap at a rate of at least 1,9 l/min (one half gallon per minute); and (b) pouring purified water from the container at a pour rate of at least 1,9 l/min (one half gallon per minute); characterized by the step, between steps (a) and (b) and (c) maintaining the tap water in the container at least 30 seconds, in contact with the material, to effect removal of contaminants therefrom.

10. A method as recited in claim 9 wherein step (c) is facilitated by rolling up a sheet (15) of activated carbon impregnated material into a spiral roll (16), the roll having a width substantially equal to the height of the container, and inserting the roll into the container to thereby fill 10-40% of the interior volume (12) of the container in a substantially uniform configuration with activated carbon in a porous sheet form.

**Patentansprüche**

1. Behälter (10) zum Reinigen von Wasser, mit: einem Körper (11), der einen hohlen Innenraum (12) von einem vorgegebenen wirksamen Volumen besitzt; und mit einem Einlaß (24) für den hohlen Innenraum und einem Auslaß (25) davon, **gekennzeichnet** durch

   ein Wasser Verunreinigungen-Entfernungsmaterial (14) in einer kleinvolumigen Anordnung, das im wesentlichen gleichmäßig in dem wirksamen Volumen verteilt ist und ein Leervolumen von 40-90% hat, um lange Verweilzeiten von Wasser in Kontakt mit dem Verunreinigungen-Entfernungsmaterial zu erreichen, währen hohe Füllungsraten und hohe Ausströmraten für den Behälter vorliegen.

2. Behälter nach Anspruch 1, ferner **dadurch gekennzeichnet**, daß das Wasserverunreinigungen-Entfernungsmaterial (14) in einer Konfiguration vorliegt, die aus der Gruppe ausgewählt ist, welche im wesentlichen aus materialimprägnierten Fasern, Vließe, Gewebe, Papiere, Filze und Schäume besteht.

3. Behälter nach Anspruch 1, ferner **dadurch gekennzeichnet**, daß das Wasserverunreinigungen-Entfernungsmaterial Fasern aufweist, die Aktivkohlematerial in einer Anordnung als Spiralrolle (16) umfaßt, wobei Teile davon im größeren Teil des effektiven Volumens des Körpers sind.

4. Behälter nach Anspruch 1, ferner **dadurch gekennzeichnet**, daß das Material in einem Rückhaltefilter (20) in dem hohlen Innenraum enthalten ist.

5. Behälter nach Anspruch 4, ferner **dadurch gekennzeichnet**, daß der Rückhaltefilter von den Innenwänden des Körpers durch Abstandsmittel (19) beabstandet ist, um einen Durchgang (21) zwischen den Innenwänden und dem Einlaß oder dem Auslaß zu bilden.

6. Behälter nach Anspruch 5, ferner **dadurch gekennzeichnet**, daß der Rückhaltefilter lediglich am Boden porös ist und einen Einlaß an seinem oberen Ende besitzt, im größten übrigen Teil von jedoch unporös ist, so daß das zu behandelnde Wasser vom Einlaß durch den Boden strömen muß, um aus dem Behälter auszutreten.

7. Behälter nach Anspruch 1, wobei das Wasserverunreinigungen-Entfernungsmaterial ein erstes Material aufweist und ferner **gekennzeichnet** ist durch ein zweites Wasserverunreinigungen-Entfernungsmaterial (48), das in dem hohlen Innenraum angeordnet ist, wobei das zweite Material mit dem ersten Material zusammenwirkt, um verschiedene beten von Verunreinigungen aus dem Wasser zu entfernen.

8. Behälter nach Anspruch 1, ferner **dadurch gekennzeichnet**, daß das Wasserverunreinigungen-Entfernungsmaterial ein Vließtuch (15) ist, daß mit Aktivkohle und Binder imprägniert ist, wobei das Tuch eine Dicke von mindestens 0,3 cm, ein Gewicht von mindestens 101,7 g/m$^2$ hat und mindestens 100% zusätzliche Aktivkohle und Binder in Kombination enthält.

9. Verfahren zum Reinigen von Fließwasser in Leitungen und die Verwendung eines Behälters (10) mit einem Wasserverunreinigungen-Entfernungsmaterial (14), das in einer kleinvolumigen Konfiguration vorliegt und Leerräume von 40-90% aufweist, durch die Schritte:
   (a) Befüllen des Behälters mit Wasser unmittelbar von einem nicht unter Druck stehenden Hahn mit einer Rate von mindestens 1,9 l/min; und (b) Abgeben von gereinigtem Wasser aus dem Behälter mit einer Abgaberate von mindestens 1,9 l/min, **gekennzeichnet** durch den Schritt, daß zwischen den Schritten (a) und (b) im Schritt (c) das Leitungswasser im Behälter mindestens 30 Sekunden lang in Kontakt mit dem Material gehalten wird, um die Schadstoffe daraus zu entfernen.

10. Verfahren nach Anspruch 9, wobei der Schritt (c) erleichtert wird, indem eine Bahn (15), die mit einem Aktivkohlenmaterial imprägniert ist, zu einer Spiralrolle (16) aufgerollt wird, wobei die Rolle eine Breite hat, die im wesentlichen gleich wie die Höhe des Behälters ist, und durch Einbringen der Rolle in den Behälter, um dadurch 10-40% des Innenvolumens (12) des Behälters in einer im wesentlichen gleichmäßigen Anordnung mit Aktivkohle in einer porösen Bahnform zu füllen.

**Revendications**

1. Conteneur (10) pour purification d'eau comprenant : un corps (11 ) ayant un intérieur creux (12) d'un volume effectif donné et une entrée (24) dans ledit intérieur creux et une sortie (25) hors de celui-ci, caractérisé par une matière qui élimine la substance polluant l'eau (14) dans une configuration à faible volume essentiellement répartie uniformément dans ledit volume effectif et ayant un volume des vides de 40 à 90 % de manière à réaliser des temps de séjour longs de l'eau en contact avec ladite matière qui élimine la substance polluante tout en assurant des vitesses de remplissage élevées et des vitesses de coulée élevées pour le conteneur.

2. Conteneur selon la revendication 1, de plus caractérisé en ce que ladite matière qui élimine la substance polluant l'eau (14) est dans une configuration sélectionnée dans le groupe comprenant essentiellement des fibres, non-tissés, tissés, feutres et mousses imprégnés de matière.

3. Conteneur selon la revendication 1, de plus caractérisé en ce que ladite matière qui élimine la substance polluant l'eau comprend des fibres comprenant une matière à charbon actif dans une configuration de rouleau en spirale (16), des portions de celui-ci étant à l'intérieur de la majorité du volume effectif du corps mentionné.

4. Conteneur selon la revendication 1, de plus caractérisé en ce que ladite matière est contenue à l'intérieur d'un filtre de rétention (20) à l'intérieur de l'intérieur creux.

5. Conteneur selon la revendication 4, de plus caractérisé par ledit filtre de rétention étant espacé des parois intérieures du corps mentionné par des organes d'espacement (19) de manière à définir une voie de passage (21) entre les parois intérieures mentionnées et l'une de ladite entrée et de ladite sortie.

6. Conteneur selon la revendication 5, de plus caractérisé en ce que ledit filtre de rétention est poreux uniquement dans son fond et a une entrée dans la partie supérieure de celui-ci tout en n'étant pas poreux dans la plupart des portions qui restent de manière à provoquer que l'eau à traiter s'écoule de l'entrée à travers le fond de celui-ci pour s'échapper du conteneur mentionné.

7. Conteneur selon la revendication 1, dans lequel ladite matière qui élimine la substance polluant l'eau comprend une première matière et de plus caractérisée par une seconde matière qui élimine la substance polluant l'eau (48) placée à l'intérieur de l'intérieur creux mentionné, ladite seconde matière coopérant avec ladite première matière pour éliminer différents types de substances polluantes de l'eau.

8. Conteneur selon la revendication 1, de plus caractérisé en ce que ladite matière qui élimine la substance polluant l'eau comprend une étoffe non-tissée (15) imprégnée de charbon actif et de liant, ladite étoffe ayant une épaisseur d'au moins 0,3 cm (un huitième de pouce), un poids d'au moins 101,7 g/m² (trois onces par yard carré) et au moins 100 % d'addition de charbon actif et de liant combinés.

9. Procédé de purification d'eau de distribution utilisant un conteneur (10) comprenant une matière qui élimine la substance polluant l'eau (14) dans une configuration à faible volume ayant un volume des vides de 40 à 90 % en employant les étapes de
(a) remplir le conteneur avec de l'eau provenant directement d'un robinet qui n'est pas sous pression à une vitesse d'au moins 1,9 l/mn (un demi-gallon par minute) et de (b) verser de l'eau purifiée provenant du conteneur à une vitesse de coulée d'au moins 1,9 l/mn (un demi-gallon par minute), caractérisé par l'étape, entres les étapes (a) et (b) de (c) maintenir l'eau de distribution dans le conteneur au moins 30 secondes en contact avec la matière pour effectuer l'élimination des substances contaminantes de celle-ci.

10. Procédé selon la revendication 9 dans lequel l'étape (c) est facilitée en enroulant une feuille (15) de matière imprégnée de charbon actif en un rouleau en spirale (16), le rouleau ayant une largeur essentiellement égale à la hauteur du conteneur et en insérant le rouleau dans le conteneur pour ainsi remplir 10 à 40 % du volume intérieur (12) du conteneur dans une configuration essentiellement uniforme avec du charbon actif en forme de feuille poreuse.

FIG. 1

FIG. 2

FIG. 3

FIG. 4

FIG. 5

FIG. 6

FIG. 7

FIG. 10

FIG. 9

FIG. 8

FIG. 11

EP 0 402 661 B1